# EUROPEAN PATENT APPLICATION

(11) **EP 2 775 638 A2**
(43) Date of publication of application: **10.09.2014**
(21) Application number: 14156730.5
(22) Date of filing: 26.02.2014
(51) Int. Cl.: H04J 3/16

(54) **Sub-rate mapping for lowest-order optical data unit**

(30) Priority: 08.03.2013 US 201313790291
(71) Applicant: Altera Corporation, San Jose, CA 95134 (US)
(72) Inventor: Haas, Wally, Mt. Pearl,, Newfoundland and Labrador A1N 4S9 (CA)
(74) Representative: Käck, Stefan

(57) **Abstract**

One aspect relates to a method for communicating data using an optical transport network. Multiple sub-rate client data signals are received (202) from client sources. The sub-rate client data signals each have a data rate which is less than a data rate capacity of a lowest-order optical channel data unit. A predetermined number of tributary slots are provided in the lowest-order optical channel data unit, and each sub-rate client data signal are mapped (204) to at least one of the tributary slots. Another aspect relates to an optical data communication server that includes a sub-rate mapper for mapping multiple sub-rate client data signals to a predetermined number of tributary slots. Other aspects and features are also disclosed.

## Description

### TECHNICAL FIELD

The present invention relates to optical data communications.

### DESCRIPTION OF THE BACKGROUND ART

A conventional Optical Transport Network (OTN) utilizes various Optical channel Data Units (ODU). For example, ODU2 may be used to transport 10 gigabit per second (10G) signals. ODU2 may be divided into four 2.5 gigabit per second (2.5G) or eight 1.25 gigabit per second (1.25G) tributary trib slots. ODU 1 may be used to transport 2.5G signals and may be mapped into one 2.5G tributary slot or two 1.25G tributary trib slots of ODU2. ODU0 may be used to transport 1.25G signals and may be mapped into one 1.25G tributary slot. By definition, ODU0 is the smallest (i.e. lowest order) ODU and is not allowed to be a higher-order ODU according to the conventional OTN standards.

### SUMMARY

The invention is defined in claims 1, 8, 15, and 16, respectively. Particular embodiments are set out in the dependent claims.

One aspect of the invention relates to a method for communicating data using an optical transport network. Multiple sub-rate client data signals are received from client sources. The sub-rate client data signals each have a data rate which is less than a data rate capacity of a lowest-order data unit. A predetermined number of tributary slots are provided in the lowest-order optical channel data unit, and each sub-rate client data signal are mapped to at least one of the tributary slots. The lowest-order optical channel data unit is transmitted onto fiber optics.

Another aspect relates to an optical data communication server that includes client interfaces, a sub-rate mapper, and a line interface. The client interfaces receive sub-rate client data signals from client sources. The client data signals each have a data rate which is less than a data rate capacity of a lowest-order data unit. The sub-rate mapper maps the sub-rate client data streams to a predetermined number of tributary slots. The line interface transmits the lowest-order optical channel data unit onto fiber optics.

Another aspect relates to an optical data communication server that includes a line interface, a sub-rate reverse mapper, and client interfaces. The line interface for receives a lowest-order optical channel data unit from fiber optics. The sub-rate reverse mapper performs reverse mapping to obtain sub-rate client data streams from tributary slots of the lowest-order optical channel data unit. The client interfaces transmit the sub-rate client data signals to client destinations.

Another aspect relates to an optical data communications system that includes a transmitting server and a receiving server. The transmitting server receives sub-rate client data signals from client sources, provides a predetermined number of tributary slots in the lowest-order optical channel data unit, and maps each sub-rate client data signal to at least one of the tributary slots. The receiving server for receives the lowest-order optical channel data unit, performs reverse mapping to obtain the sub-rate client data streams from tributary slots, and transmits the sub-rate client data streams to client destinations.

### BRIEF DESCRIPTION OF THE DRAWINGS

FIG. 1 is a schematic diagram of a system for optical data communications in accordance with an embodiment of the invention.
FIG. 2 is a flow chart of a method for optical data communication in accordance with an embodiment of the invention.
FIG. 3 is a schematic diagram of sub-rate mapping for a lowest-order optical channel data unit in accordance with an embodiment of the invention.
FIG. 4 is a simplified partial block diagram of a field programmable gate array (FPGA) that may be configured to implement an embodiment of the present invention.
FIG. 5 shows a block diagram of an exemplary digital system that may be configured to utilize an embodiment of the present invention.

### DETAILED DESCRIPTION

As discussed above, ODU0 is the lowest-order data unit and is not allowed to be used as a higher-order data unit according to the conventional OTN standards. As such, the only way to get a client data signal to be transported using an ODU0 is by using the entire ODU0 with generic mapping procedure (GMP).

However, applicant has determined that this feature of ODU0 results in disadvantageous waste of bandwidth in certain instances. For example, mapping Synchronous Transport Module level 1 (STM-1) signals into ODU0 results in 87% of the available bandwidth being wasted. Similarly, mapping Synchronous Transport Module level 4 (STM-4), or fast Ethernet, or Standard Definition Serial Digital Interface (SD-SDI) signals into ODU0 also wastes substantial bandwidth.

The present disclosure provides a technological solution which allows for client data signals (such as STM-1, STM-4, fast Ethernet, SD-SDI, and others) to be mapped into ODU0 with much less wasted bandwidth. In accordance with an embodiment of the invention, sub-rate mapping into an ODU0 (the lowest-order data unit in an Optical Transport Network) may be achieved by multiplexing bits from the plurality of client data streams into bytes of a payload unit of a lowest-order optical channel data unit.

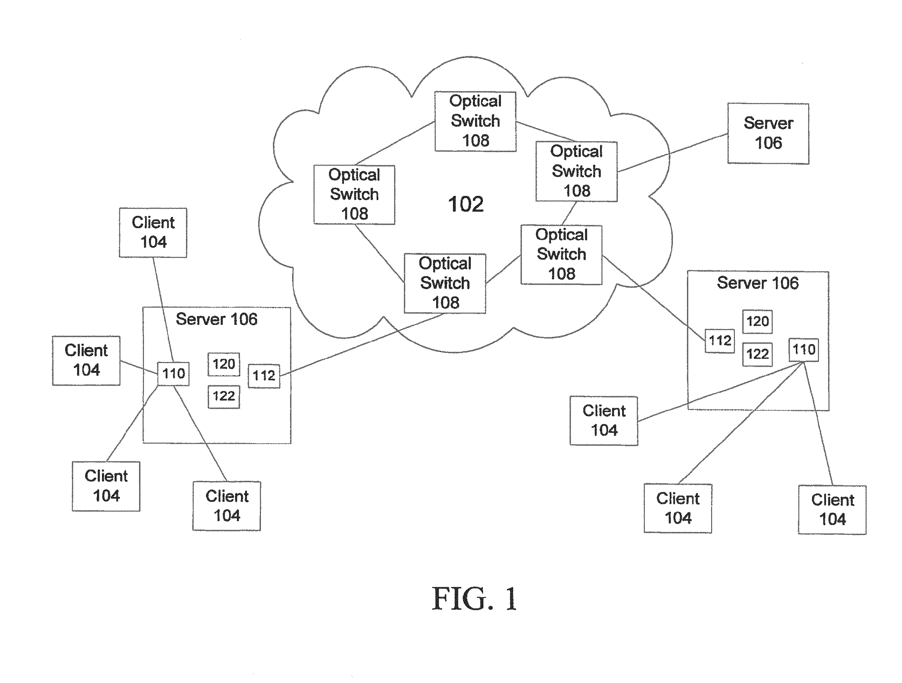

FIG. 1 is a schematic diagram of an exemplary system for optical data communications in accordance with an embodiment of the invention. The exemplary system includes optical data communication network 102, client data nodes 104, and optical data communication servers 106.

The example optical data communication network 102 depicted includes multiple optical switches 108. It is contemplated that the number of switches 108 and the interconnections between the switches 108 will vary depending on the implementation of the optical data communication network 102. Optical channel data units may be transported from one server 106 to another server 106 by way of the optical data communications network 102. The servers 106 may communicatively connect to the optical data communications network 102 via line interfaces 112.

Each client data node 104 may generate and send a client data signal to an optical data communication server 106. Multiple client data signals may be received via client interfaces 110 by the server 106. The client data signals may include sub-rate client data signals. Each sub-rate client data signal has a data rate which is lower than a data rate capacity of a lowest-order data unit supported by the optical data communications network. For example, the optical data communications network may be an Optical Transport Network, and the lowest-order data unit may be the zero-order optical channel data unit which is designated as ODU0.

A server 106 may include a sub-rate mapper 120 and a sub-rate reverse mapper 122. In accordance with an embodiment of the invention, the sub-rate mapper 120 at the transmitting server may map the multiple client data signals into the payload unit of a lowest-order optical channel data unit (i.e. into the lowest-order payload unit). The sub-rate reverse mapper 122 at the receiving server may reverse map the lowest-order payload unit to regenerate the multiple client data signals. For example, the lowest-order optical channel data unit may be ODU0 in an Optical Transport Network. The payload unit for ODU0 may be denoted OPU0.

In one embodiment, the payload unit of the lowest-order data unit may be effectively divided into eight tributary (trib) slots and each sub-rate client data signal may be mapped to one or more of the eight trib slots. If the lowest-order data unit is ODU0, then each trib slot has a capacity of 154.87 megabits per second (Mb/s) which is (238/239) x 1.244160G / 8. A bit-synchronously-mapped STM-1 data signal requires (239/238) x 155.52 Mb/s = 156.17 Mb/s and so is mapped onto two of the eight trib slots. A bit-synchronously-mapped STM-4 data signal requires (239/238) x 622.08 Mb/s = 624.69 Mb/s and so is mapped onto five of the eight trib slots. A bit-synchronously-mapped fast Ethernet data signal requires (239/238) x 125 Mb/s = 125.52 Mb/s and so is mapped onto one of the eight trib slots. An SD-SDI data signal may have a data rate of 270 Mb/s, 360 Mb/s, 143 Mb/s, or 177 Mb/s and so would be mapped onto two, three, one, or two of the eight trib slots, respectively, depending on the rate. Similarly, other sub-rate data signals (including SBCON, DVB-ASI, and others) may be mapped onto one or more of the eight trib slots.

In another embodiment, the payload unit of the lowest-order data unit may be effectively divided into sixteen trib slots and each sub-rate client data signal may be mapped to one or more of the sixteen trib slots. If the lowest-order data unit is ODU0, then each trib slot has a capacity of 77.43 megabits per second (Mb/s) which is (238/239) x 1.244160G / 16. A bit-synchronously-mapped STM-1 data signal requires 156.17 Mb/s and so is mapped onto three of the sixteen trib slots. A bit-synchronously-mapped STM-4 data signal requires 624.69 Mb/s and so is mapped onto nine of the sixteen trib slots. A bit-synchronously-mapped fast Ethernet data signal requires 125.52 Mb/s and so is mapped onto two of the sixteen trib slots. An SD-SDI data signal may have a data rate of 270 Mb/s, 360 Mb/s, 143 Mb/s, or 177 Mb/s and so would be mapped onto four, five, two, or three of the sixteen trib slots, respectively, depending on the rate. Similarly, other sub-rate data signals (including SBCON, DVB-ASI, and others) may be mapped onto one or more of the sixteen trib slots.

In addition, the server 106 may map multiple lower-order data units to higher-order data units and perform reverse mapping to obtain multiple lower-order data units from higher-order data units. This mapping may be done according to hierarchical tiers. For example, two ODU0 may be mapped to an ODU1, and four ODU1 may be mapped to an ODU2, and similarly for higher orders. The sub-rate reverse mapper 122 may undo the mapping to obtain the lower-order data units from higher-order data units. For example, two ODU0 may be obtained from an ODU1, and four ODU1 may be obtained from an ODU2, and similarly for higher orders.

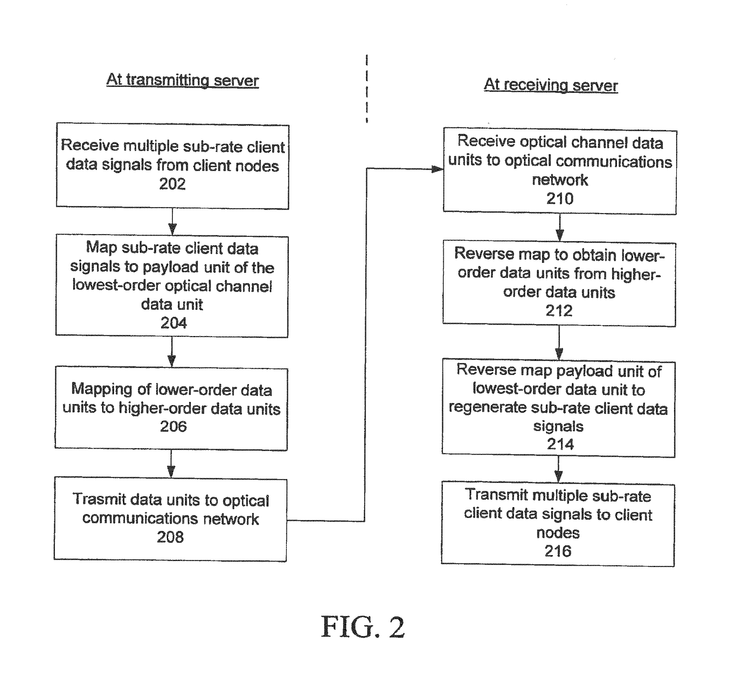

FIG. 2 is a flow chart of an exemplary method for optical data communication in accordance with an embodiment of the invention. The method may be performed, for example, using the optical data communications system of FIG. 1 or a similar system.

Per block 202, multiple client data signals may be received at an optical data communications server (the transmitting server). The multiple client data signals may include multiple sub-rate client data signals which have data rates lower than the data rate supported by a lowest-order optical channel data unit. For example, the lowest-order optical channel data unit may be ODU0 of the Optical Transport Network, and the client data signals may include one or more STM-1, STM-4, fast Ethernet, or SD-SDI data signals. The client data signals with data rates lower than the maximum data rate supported by the lowest-order optical channel data unit may be referred to as sub-rate client data signals. The payload unit of the lowest-order optical channel data unit may be referred to as the lowest-order optical channel payload unit or the lowest-order payload unit.

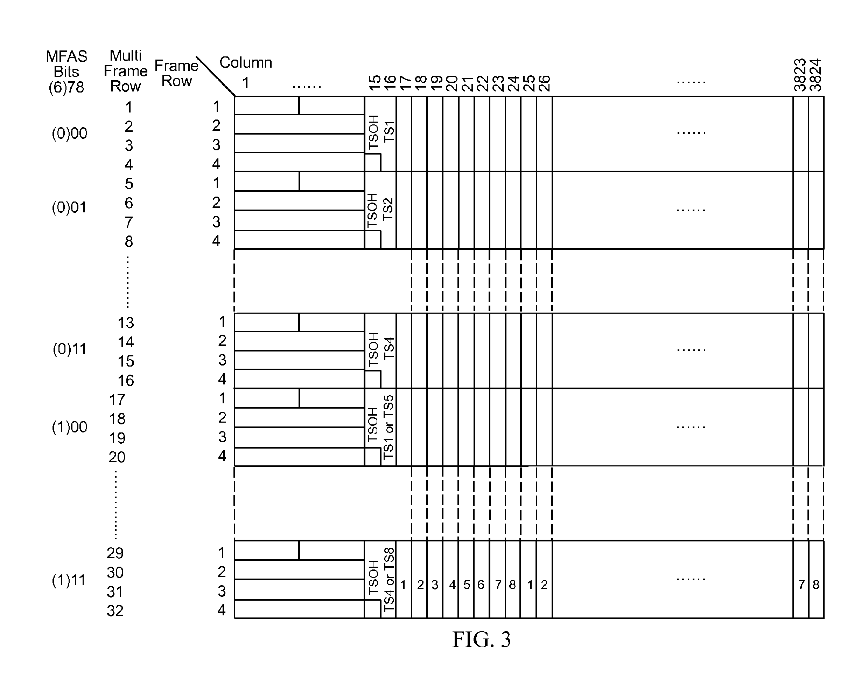

Per block 204, multiple sub-rate client data signals may be multiplexed into the payload unit of a lowest-order data unit (i.e. into a lowest-order payload unit) by a sub-rate mapper in the transmitting server. As disclosed herein, the lowest-order optical data unit may be divided into a predetermined number of tributary slots (for example, eight or sixteen tributary slots) and each sub-rate client data signal may be mapped to one or more of the tributary slots. In accordance with an embodiment of the invention, data from the payload areas of the sub-rate client data signals may be byte multiplexed into the lowest-order payload unit, and the tributary slot overhead (TSOH) for the sub-rate client data signals may be frame multiplexed into the overhead area of the lowest-order payload unit. An example of the byte-interleaving of the data and the frame-interleaving of the overhead is described below in relation to FIG. 3.

Per block 206, lower-order optical channel data units may be mapped by the sub-rate mapper in the transmitting server into higher-order optical channel data units. For example, in an Optical Transport Network, two ODU0 may be mapped to an ODU1, and four ODU1 may be mapped to an ODU2, and similarly for higher orders.

Per block 208, the optical channel data units may be transmitted from the transmitting server to an optical data communications network for transport to another optical data communication server (the receiving server). Per block 210, the receiving server may receive the optical channel data units that were transported via the optical data communications network.

Per block 212, the sub-rate reverse mapper in the receiving server may obtain lower-order optical channel data units from higher-order optical channel data units. For example, in an Optical Transport Network, two ODU0 may be reverse mapped from an ODU1, and four ODU1 may be reverse mapped from an ODU2, and similarly for higher orders.

Per block 214, the multiple sub-rate client data signals may be de-multiplexed from a lowest-order optical channel data unit by the sub-rate reverse mapper in the receiving server. In accordance with an embodiment of the invention, the sub-rate reverse mapper may de-multiplex the interleaved bytes from the lowest-order payload unit to obtain the byte streams for the tributary slots. The client data signals may then be regenerated from the byte streams based on the reverse mapping of the tributary slots to the sub-rate client data signals.

Per block 216, the regenerated sub-rate client data signals may be transmitted from the receiving server to their client destinations. As described above, these regenerated sub-rate client data signals are data signals at data rates substantially lower than the data rate for the lowest-order optical channel data unit which is supported by the optical data communications network. This advantageously increases the utilization of the available bandwidth in the lowest-order data unit without needing to change the switches in the optical

FIG. 3 is a schematic diagram of an exemplary sub-rate mapping for a lowest-order optical channel data unit in accordance with an embodiment of the invention. In this example, eight 155 Mb/s tributary slots are mapped to ODU0 of an Optical Transport Network.

As shown in FIG. 3, the lowest-order data unit (ODU0, in this example) may be organized in rows and columns. Each row may include 3824 columns (numbered 1-3284). Columns 1-16 may be used for overhead information, and columns 17-3284 may be used for payload data.

Each frame may include four rows (numbered 1-4), and a multi frame row number is shown so as to number the rows across multiple frames. A multi-frame alignment signal (MFAS) may be used to number the frames. As shown, the MFAS may be an 8-bit number with bit numbers 6, 7, and 8 being shown in the figure.

In accordance with an embodiment of the invention, tributary slot overhead (TSOH) data may be frame multiplexed into ODU0. As indicated in FIG. 3, columns 15 and 16 of the first frame [with MFAS bits (6)78 being (0)00] may be used to transmit the TSOH data for a first tributary slot (TS1). Columns 15 and 16 of the second frame [with MFAS bits (6)78 being (0)01] may be used to transmit the TSOH data for a second tributary slot (TS2). Columns 15 and 16 of the third frame [with MFAS bits (6)78 being (0)10] may be used to transmit the TSOH data for a third tributary slot (TS3). Columns 15 and 16 of the fourth frame [with MFAS bits (6)78 being (0)11] may be used to transmit the TSOH data for a fourth tributary slot (TS4).

In addition, columns 15 and 16 of the fifth frame [with MFAS bits (6)78 being (1)00] may be used to transmit the TSOH data for either the first tributary slot (TS1) or the fifth tributary slot (TS5), depending on the mapping. Columns 15 and 16 of the sixth frame [with MFAS bits (6)78 being (1)01] may be used to transmit the TSOH data for either the second tributary slot (TS2) or the sixth tributary slot (TS6), depending on the mapping. Columns 15 and 16 of the seventh frame [with MFAS bits (6)78 being (1)10] may be used to transmit the TSOH data for either the third tributary slot (TS3) or the seventh tributary slot (TS7), depending on the mapping. Columns 15 and 16 of the eighth frame [with MFAS bits (6)78 being (1)11] may be used to transmit the TSOH data for either the fourth tributary slot (TS4) or the eighth tributary slot (TS8), depending on the mapping.

Furthermore, payload data for the tributary slots may be byte multiplexed into columns 17-3284 of ODU0. As shown, for each row, one byte from each of tributary slots 1 through 8 may be mapped to columns 17 through 24, respectively. A next byte from each of tributary slots 1 through 8 may be mapped respectively to columns 25 through 32 of the row. And so on, until a last byte from each of tributary slots 1 through 8 may be mapped respectively to columns 3277 through 3284 of the row.

### FPGA Implementation

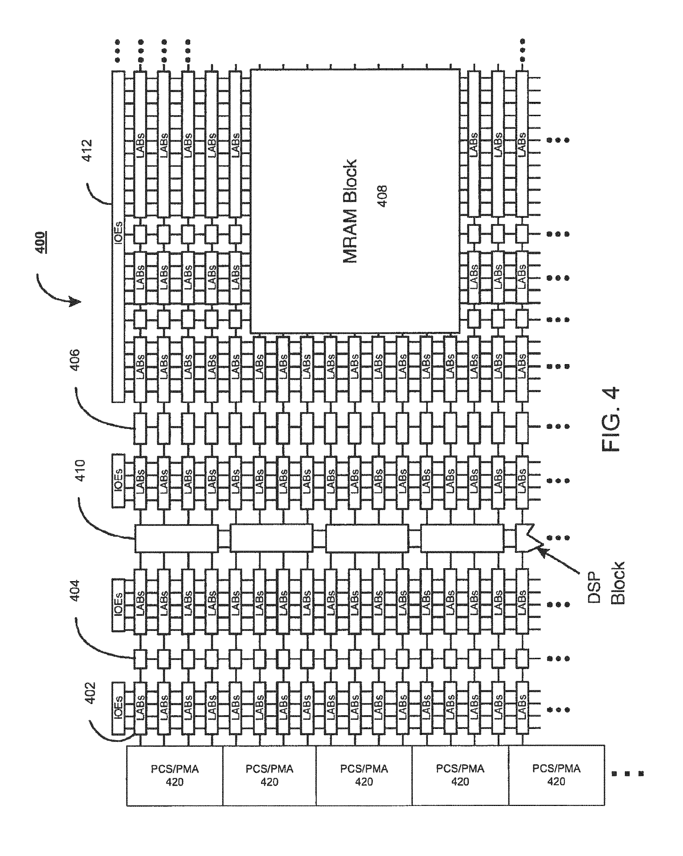

FIG. 4 is a simplified partial block diagram of a field programmable gate array (FPGA) 400 that may be configured with circuitry to implement an embodiment of the present invention. It should be understood that embodiments of the present invention can be used in numerous types of integrated circuits such as field programmable gate arrays (FPGAs), programmable logic devices (PLDs), complex programmable logic devices (CPLDs), programmable logic arrays (PLAs), digital signal processors (DSPs) and application specific integrated circuits (ASICs).

FPGA 400 includes within its "core" a two-dimensional array of programmable logic array blocks (or LABs) 402 that are interconnected by a network of column and row interconnect conductors of varying length and speed. LABs 402 include multiple logic elements (or LEs). An LE is a programmable logic block that provides for efficient implementation of user defined logic functions. An FPGA has numerous logic elements that can be configured to implement various combinatorial and sequential functions. The logic elements have access to a programmable interconnect structure. The programmable interconnect structure can be programmed to interconnect the logic elements in almost any desired configuration.

FPGA 400 may also include a distributed memory structure including random access memory (RAM) blocks of varying sizes provided throughout the array. The RAM blocks include, for example, blocks 404, blocks 406, and block 408. These memory blocks can also include shift registers and FIFO buffers.

FPGA 400 may further include digital signal processing (DSP) blocks 410 that can implement, for example, multipliers with add or subtract features. Input/output elements (IOEs) 412 located, in this example, around the periphery of the chip support numerous single-ended and differential input/output standards. Each IOE 412 is coupled to an external terminal (i.e., a pin) of FPGA 400.

An array of PMA and PCS circuitry 420 may be included as shown, for example. The PCS circuitry generally provides digital logic functions which implement data communication protocols, while the PMA circuitry generally provides mixed (analog/digital) signal functionality for the data communications. For example, for certain protocols, the PCS circuitry may be configured to perform, among other functions, 8 bit-to-10 bit and/or 128 bit-to-130 bit encoding for data to be sent to the PMA circuitry and 10 bit-to-8 bit and/or 130 bit-to-128 bit decoding for data received from the PMA circuitry. The PMA circuitry may be configured to perform, among other functions, serialization of data to be transmitted (conversion from parallel to serial) and de-serialization of received data (conversion from serial to parallel).

A subset of the LABs 402 coupled to modules in the PMA/PCS array 420 may be configured to implement the methods and apparatus described above. For example, a programmed FPGA may be used to implement the sub-rate mapper and/or the sub-rate reverse mapper in a server. Alternatively, the above-described methods and apparatus may be implemented using hardwired circuitry, or part configured LABs 402 and part hardwired circuitry.

It is to be understood that FPGA 400 is described herein for illustrative purposes only and that the present invention can be implemented in many different types ofPLDs, FPGAs, and ASICs.

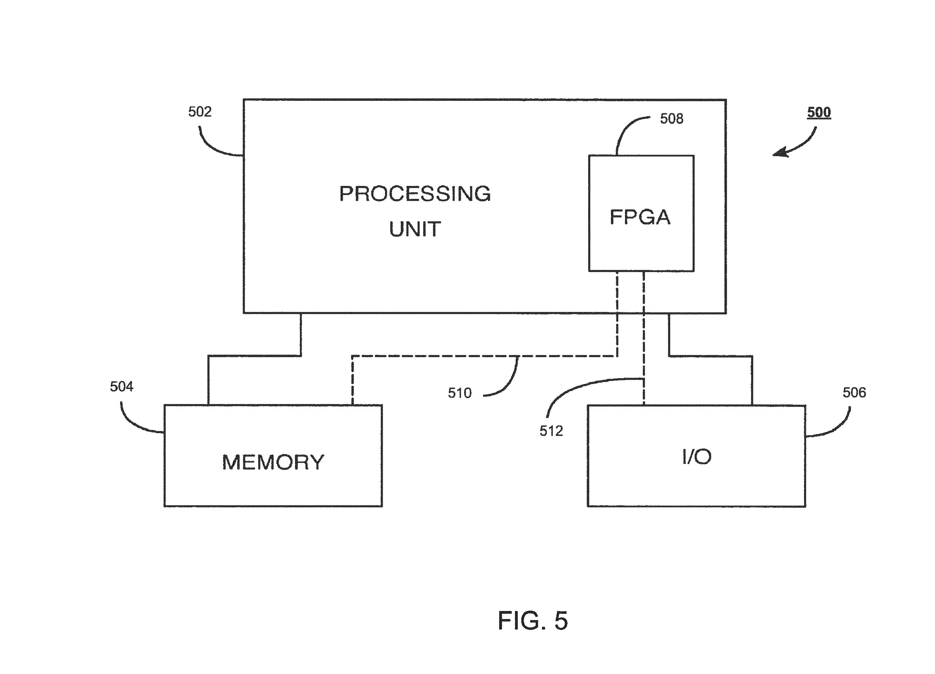

The present invention can also be implemented in a system that has a FPGA as one of several components. FIG. 5 shows a block diagram of an exemplary digital system 500 that can embody techniques of the present invention. System 500 may be a programmed digital computer system, digital signal processing system, specialized digital switching network, or other processing system. Moreover, such systems can be designed for a wide variety of applications such as telecommunications systems, automotive systems, control systems, consumer electronics, personal computers, Internet communications and networking, and others. Further, system 500 may be provided on a single board, on multiple boards, or within multiple enclosures.

System 500 includes a processing unit 502, a memory unit 504, and an input/output (I/O) unit 506 interconnected together by one or more buses. According to this exemplary embodiment, FPGA 508 is embedded in processing unit 502. FPGA 508 can serve many different purposes within the system 500. FPGA 508 can, for example, be a logical building block of processing unit 502, supporting its internal and external operations. FPGA 508 is programmed to implement the logical functions necessary to carry on its particular role in system operation. FPGA 508 can be specially coupled to memory 504 through connection 510 and to I/O unit 506 through connection 512.

Processing unit 502 may direct data to an appropriate system component for processing or storage, execute a program stored in memory 504, receive and transmit data via I/O unit 506, or other similar function. Processing unit 502 may be a central processing unit (CPU), microprocessor, floating point coprocessor, graphics coprocessor, hardware controller, microcontroller, field programmable gate array programmed for use as a controller, network controller, or any type of processor or controller. Furthermore, in many embodiments, there is often no need for a CPU.

For example, instead of a CPU, one or more FPGAs 508 may control the logical operations of the system. As another example, FPGA 508 acts as a reconfigurable processor that may be reprogrammed as needed to handle a particular computing task. Alternately, FPGA 508 may itself include an embedded microprocessor. Memory unit 504 may be a random access memory (RAM), read only memory (ROM), fixed or flexible disk media, flash memory, tape, or any other storage means, or any combination of these storage means.

In the above description, numerous specific details are given to provide a thorough understanding of embodiments of the invention. However, the above description of illustrated embodiments of the invention is not intended to be exhaustive or to limit the invention to the precise forms disclosed. One skilled in the relevant art will recognize that the invention can be practiced without one or more of the specific details, or with other methods, components, etc.

In other instances, well-known structures or operations are not shown or described in detail to avoid obscuring aspects of the invention. While specific embodiments of, and examples for, the invention are described herein for illustrative purposes, various equivalent modifications are possible within the scope of the invention, as those skilled in the relevant art will recognize. These modifications may be made to the invention in light of the above detailed description.

## Claims

1. A method for communicating data using an optical transport network (102), the method comprising:
receiving (202) a plurality of sub-rate client data signals from client sources (104), wherein the plurality of sub-rate client data signals each have a data rate which is less than a data rate capacity of a lowest-order optical channel data unit;
providing a predetermined number of tributary slots in the lowest-order optical channel data unit;
mapping (204) each sub-rate client data signal of the plurality of sub-rate client data signals to at least one of the tributary slots; and
transmitting (208) the lowest-order optical channel data unit onto fiber optics.

2. The method of claim 1, wherein the lowest-order optical channel data unit comprises a lowest-order payload unit, the lowest-order payload unit comprises a payload area, and payload data from the predetermined number of tributary slots are byte multiplexed into the payload area.

3. The method of claim 2, wherein the lowest-order payload unit further comprises a payload unit overhead area, and overhead data for the tributary slots are frame multiplexed into the payload unit overhead area.

4. The method of any one of claims 1 to 3, wherein the predetermined number of tributary slots is eight, and wherein each tributary slot preferably has a data rate capacity of 154.87 megabits per second.

5. The method of any one of claims 1 to 3, wherein the predetermined number of tributary slots is sixteen, and wherein each tributary slot preferably has a data rate capacity of 77.43 megabits per second.

6. The method of any one of claims 1 to 5, wherein a sub-rate client data signal is mapped to multiple tributary slots.

7. The method of any one of claims 1 to 6, further comprising:
receiving (210) the lowest-order optical channel data unit;
reverse mapping (214) to obtain the plurality of sub-rate client data signals from the tributary slots; and
transmitting (216) the plurality of sub-rate client data signals to client destinations.

8. An optical data communication server comprising:
a plurality of client interfaces (110) adapted to receive a plurality of sub-rate client data signals from client sources (104), wherein the plurality of client data signals each have a data rate which is less than a data rate capacity of a lowest-order optical channel data unit;
a sub-rate mapper (120) adapted to provide a predetermined number of tributary slots in the lowest-order optical channel data unit and to map each sub-rate client data signal of the plurality of sub-rate client data signals into at least one of the tributary slots; and
a line interface (112) adapted to transmit the lowest-order optical channel data unit to fiber optics.

9. The server of claim 8, wherein the lowest-order optical channel data unit comprises a lowest-order payload unit, and wherein the sub-rate mapper (120) is adapted to byte multiplex payload data from the predetermined number of tributary slots to a payload area of the lowest-order payload unit.

10. The server of claim 9, wherein the sub-rate mapper (120) is further adapted to frame multiplex overhead data for the tributary slots into an overhead area of the lowest-order payload unit.

11. The server of any one of claims 8 to 10, wherein the predetermined number of tributary slots is eight, and wherein each tributary slot preferably has a data rate capacity of 154.87 megabits per second.

12. The server of any one of claims 8 to 10, wherein the predetermined number of tributary slots is sixteen, and wherein each tributary slot preferably has a data rate capacity of 77.43 megabits per second.

13. The server of any one of claims 8 to 12, wherein the sub-rate mapper (120) is adapted to map a sub-rate client data signal to multiple tributary slots.

14. The server of any one of claims 8 to 13, further comprising a sub-rate reverse mapper (122);
wherein the line interface (112) is further adapted to receive lowest-order optical channel data units from fiber optics;
wherein the sub-rate reverse mapper (122) is adapted to reverse map to obtain a plurality of received sub-rate client data signals from the tributary slots; and
wherein the plurality of client interfaces (110) is further adapted to transmit the plurality of received sub-rate client data signals to client destinations.

15. An optical data communication server comprising:
a line interface (112) adapted to receive a lowest-order optical channel data unit from fiber optics;
a sub-rate reverse mapper (122) adapted to reverse map to regenerate a plurality of sub-rate client data signals from tributary slots of the lowest-order optical channel data unit, wherein the plurality of sub-rate client data signals each have a data rate which is less than a data rate capacity of the lowest-order optical channel data unit; and
a plurality of client interfaces (110) adapted to transmit the plurality of sub-rate client data signals to client destinations.

16. An optical data communication system, the system comprising:
a transmitting server configured to receive a plurality of sub-rate client data signals from client sources, wherein the plurality of sub-rate client data signals each have a data rate which is less than a data rate capacity of a lowest-order optical channel data unit, to provide a predetermined number of tributary slots in the lowest-order optical channel data unit, and to map each sub-rate client data signal of the plurality of sub-rate client data signals into at least one of the tributary slots; and
a receiving server configured to receive the lowest-order optical channel data unit, to reverse map to regenerate the plurality of sub-rate client data signals from the tributary slots, and to transmit the plurality of sub-rate client data signals to client destinations.
